# EUROPEAN PATENT SPECIFICATION

(11) **EP 4 498 711 B1**
(45) Date of publication and mention of the grant of the patent: **18.02.2026**
(21) Application number: 24189937.6
(22) Date of filing: 22.07.2024
(51) Int. Cl.: H04W 4/40, H04W 52/02

(54) **METHOD OF TRANSMITTING AND RECEIVING DATA IN WIRELESS COMMUNICATION SYSTEM AND APPARATUS THEREFOR**
VERFAHREN ZUM SENDEN UND EMPFANGEN VON DATEN IN EINEM DRAHTLOSKOMMUNIKATIONSSYSTEM UND VORRICHTUNG DAFÜR
PROCÉDÉ DE TRANSMISSION ET DE RÉCEPTION DE DONNÉES DANS UN SYSTÈME DE COMMUNICATION SANS FIL ET APPAREIL ASSOCIÉ

(30) Priority: 27.07.2023 KR 20230098281; 04.07.2024 KR 20240088033
(43) Date of publication of application: 29.01.2025
(73) Proprietor: LG Electronics Inc., Yeongdeungpo-gu Seoul 07336 (KR)
(72) Inventor: KWAK, Minsung, 06772 Seoul (KR); SEO, Hanbyul, 06772 Seoul (KR); BYUN, Jaihyun, 06772 Seoul (KR)
(74) Representative: Frenkel, Matthias Alexander

(56) References cited:
- WO-A1-2017/172089
- WO-A1-2022/154590

## Description

### TECHNICAL FIELD

Present disclosure relates to a wireless communication system, and more specifically, to a method for transmitting and receiving data in an intelligent transport system (ITS) and a device for performing the same.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

An intelligent transport system (ITS) refers to a system that incorporates a wireless communication technology to achieve a more efficient transportation system and enhance safety. The ITS may monitor traffic conditions in real-time and collect/process data through closed-circuit televisions (CCTVs), sensor networks, global positioning system (GPS) devices, and wireless communication systems. The ITS may support communication between vehicles, for example, allow the vehicles to communicate with each other and share information regarding the surrounding environment to improve autonomous driving and traffic safety.

Document WO 2022154590 discloses a method for transmitting a message by a first vehicle to everything (V2X) terminal in a wireless communication system. A transmission interval is pre-configured. A Personal Safety Message (PSM) is used. The message includes the battery status.

### DISCLOSURE

### TECHNICAL PROBLEM

An object of the disclosure is to provide a method and device for transmitting or receiving data more accurately and efficiently in a wireless communication system.

The objects of the disclosure are not limited to this object, and other objects may be inferred from the disclosed embodiments.

### TECHNICAL SOLUTION

In an aspect of the present disclosure, provided herein is a method of transmitting a message by a device in a wireless communication system. The method may include: obtaining information regarding a status of a battery of the device; and transmitting a personal safety message (PSM) including a first data element (DE) for notifying an event occurring on the device, based on the information regarding the battery status of the device and a battery charging threshold. Based on that a field for notifying a low battery status in the first DE is set to a TRUE value, the PSM may be configured to further include a second DE for providing information regarding a PSM transmission interval of the device in the low battery status.

The PSM transmission interval of the device in the low battery status may be set to be higher than or equal to a first value.

The first value may be related to a PSM transmission interval when the battery status of the device is higher than or equal to the battery charging threshold.

The first value is 1100 milliseconds.

The device may form a vulnerable road user (VRU) cluster with at least one other device, and the device may determine, based on the battery status of the device, whether to be a leader which performs PSM transmission on behalf of the VRU cluster.

Based on that the battery status of the device is lower than the battery charging threshold, the device may operate as a member other than the leader of the VRU cluster.

Based on that the device operates in a battery saving mode, the device may operate as a member other than a leader of a VRU cluster.

The PSM may include information for notifying that the device is charging the battery or operating in a battery saving mode.

The device may be a user equipment (UE) for a vulnerable road user (VRU).

In another aspect of the present disclosure, provided herein is a computer-readable recording medium having recorded thereon a program for executing the message transmission method described above.

In another aspect of the present disclosure, provided herein is a device configured to transmit a message in a wireless communication system. The device may include: a memory storing instructions; and a processor configured to perform operations by executing the instructions. The operations performed by the processor may include: obtaining information regarding a status of a battery of the device; and transmitting a PSM including a first DE for notifying an event occurring on the device, based on the information regarding the battery status of the device and a battery charging threshold. Based on that a field for notifying a low battery status in the first DE is set to a TRUE value, the PSM may be configured to further include a second DE for providing information regarding a PSM transmission interval of the device in the low battery status.

The device may further include a transceiver.

The device may be a UE for a VRU.

The device may be a processing device configured to control a UE for a VRU.

In another aspect of the present disclosure, provided herein is a method of receiving a message by a device in a wireless communication system. The method may include: receiving a PSM including a first DE for notifying an event occurring on another device; and obtaining information regarding a status of a battery of the other device based on the first DE. Based on that a field for notifying a low battery status in the first DE is set to a TRUE value, the device may be configured to: determine that the battery status of the other device is lower than a battery charging threshold; and obtain a second DE providing information regarding a PSM transmission interval of the other device in the low battery status from the PSM.

In a further aspect of the present disclosure, provided herein is a device configured to receive a message in a wireless communication system. The device may include a memory storing instructions; and a processor configured to perform operations by executing the instructions. The operations performed by the processor may include: receiving a PSM including a first DE for notifying an event occurring on another device; and obtaining information regarding a status of a battery of the other device based on the first DE. Based on that a field for notifying a low battery status in the first DE is set to a TRUE value, the device may be configured to: determine that the battery status of the other device is lower than a battery charging threshold; and obtain a second DE providing information regarding a PSM transmission interval of the other device in the low battery status from the PSM.

### ADVANTAGEOUS EFFECTS

According to an embodiment of the present disclosure, data can be more accurately and efficiently transmitted or received in a wireless communication system.

The effects of the disclosure are not limited to this effect, and other advantageous effects may be inferred from the disclosed embodiments.

### BRIEF DESCRIPTION OF THE DRAWINGS

FIG. 1 is a diagram for explaining vehicle-to-everything (V2X) communication.
FIG. 2 illustrates a radio protocol architecture for sidelink (SL) communication.
FIG. 3 illustrates a user equipment (UE) performing V2X or SL communication.
FIG. 4 illustrates an example of transmission of a second personal safety message (PSM2) at a VRU device according to an embodiment.
FIG. 5 illustrates an example of a V2X connection management method in consideration of a battery state.
FIG. 6 illustrates a flow of a method by which a device transmits a message according to an embodiment.
FIG. 7 illustrates a flow of a method by which a device receives a message according to an embodiment.
FIG. 8 illustrates a communication system applicable to the present disclosure.
FIG. 9 illustrates a wireless device to which the present disclosure can be applied.
FIG. 10 shows another example of a wireless device applicable to the present disclosure.
FIG. 11 illustrates a vehicle or autonomous vehicle applicable to the present disclosure.

### DETAILED DESCRIPTION

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

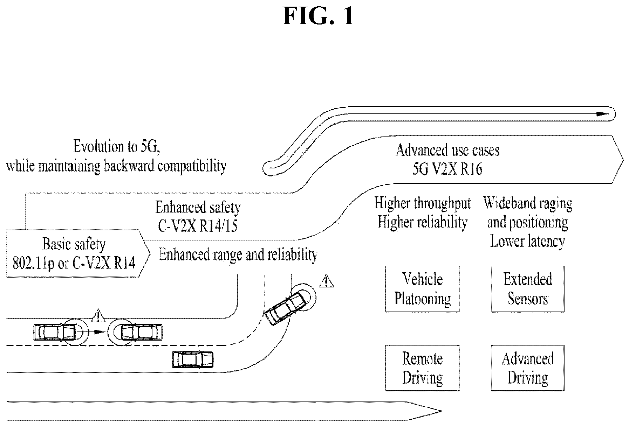

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 milliseconds (ms). For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

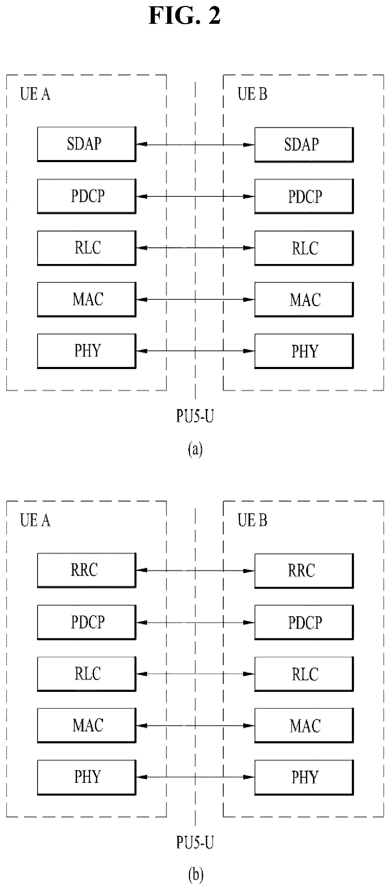

FIG. 2 illustrates a radio protocol architecture for SL communication. Specifically, FIG. 2-(a) shows a user plane protocol stack of NR, and FIG. 2-(b) shows a control plane protocol stack of NR.

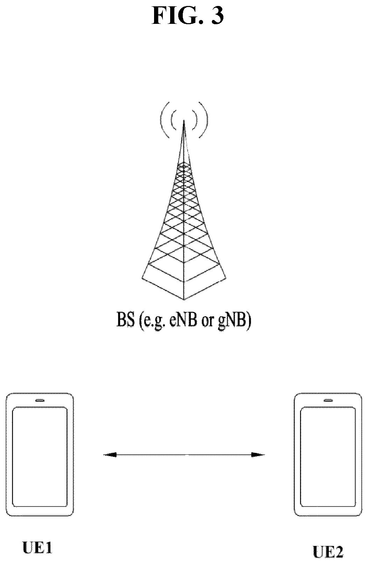

FIG. 3 illustrates UEs performing V2X or SL communication.

Referring to FIG. 3, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

### [Battery Management at VRU]

The Society of Automotive Engineers (SAE) standard defines a personal safety message (PSM). Specifically, the PSM may be categorized into a first PSM transmitted by a vehicle and a second PSM (PSM2) transmitted by a vulnerable road user (VRU). Herein, the term PSM may refer to at least one of the first PSM and/or the second PSM, depending on the context.

If the battery charge of a VRU device is below a predetermined value (e.g., 25% or lower), the VRU device may indicate a low battery status through an EventFlags data element (DE) included in the PSM.

Table 1 is an excerpt of the PSM in the SAE standard.

**[Table 1]**

| |
|---|
| PersonalSafetyMessage ::= SEQUENCE { |
| basicType PersonalDeviceUserType, |
| secMark DSecond, |
| msgCnt MsgCount, |
| id TemporaryID, |
| position Position3D, -- Lat, Long, Elevation |
| accuracy PositionalAccuracy, |
| speed Velocity, |
| heading Heading, |
| accelSet AccelerationSet4Way OPTIONAL, |
| pathHistory PathHistory OPTIONAL, |
| pathPrediction PathPrediction OPTIONAL, |
| propulsion PropelledInformation OPTIONAL, |
| useState PersonalDeviceUsageState OPTIONAL, |
| crossRequest PersonalCrossingRequest OPTIONAL, |
| crossState PersonalCrossingInProgress OPTIONAL, |
| clusterSize NumberOfParticipantsInCluster OPTIONAL, |
| clusterRadius PersonalClusterRadius OPTIONAL, |
| eventResponderType PublicSafetyEventResponderWorkerType OPTIONAL, |
| activityType PublicSafetyAndRoadWorkerActivity OPTIONAL, |
| activitySubType PublicSafetyDirectingTrafficSubType OPTIONAL, |
| assistType PersonalAssistive OPTIONAL, |
| sizing UserSizeAndBehaviour OPTIONAL, |
| attachment Attachment OPTIONAL, |
| attachmentRadius AttachmentRadius OPTIONAL, |
| animalType AnimalType OPTIONAL, |
| **events EventFlags** OPTIONAL, |
| regional SEQUENCE (SIZE(1..4)) OF |
| RegionalExtension {{REGION.Reg-PersonalSafetyMessage}} OPTIONAL, |
| ... |
| } |

Table 2 is an excerpt of the content regarding the EventFlags DE in the SAE standard.

**[Table 2]**

| | |
|---|---|
| Use: The event flags data element conveys the sender's state with regard to a set of events. For each event, the sender has the option to set the flag to one if the stated criteria are met, but it is not required to do so. The set of event flags and their respective minimum criteria are listed below. These definitions and criteria are normative. The Event Flag data element should not be included in a message unless at least one event flag is set to one. When one or more criteria associated with an event are no longer satisfied, the sender shall set the flag to zero in any event flag data element it sends. The presence of the event flag element in a message indicates that an unusual event has occurred. A vehicle or VRU receiving such a message might decide to process it differently than a message that does not include the event flag element. When a given event flag is set to one, the message might include related optional data as well. Further details of these operational concepts can be found in the relevant standards. | |
| | If no further normative requirements are provided, the below flags shall be used as given below. |
| | • Hazard Lights: The hazard lights are active. |
| | • ABS: ABS system is activated and active. |
| | • Traction Control: System activated and active. |
| | • Stability Control: System activated and active. |
| | • Hard Braking: The vehicle is decelerating at a level of greater than 0.4 g. |
| | • Emergency call: an emergency call has been triggered in the last 30mins |
| | • Stability Loss: Indicating that the VRU has lost stability (e.g. based on internal sensors) |
| | • **Low Battery: Battery charge in VRU is less than 25%** |
| ASN.1 Representation: | |
| EventFlags ::= BIT STRING { | |
| eventHazardLights (0), | |
| eventABSactivated (1), | |
| eventTractionControlLoss (2), | |
| eventStabilityControlactivated (3), | |
| eventStabilityLoss (4), | |
| eventHardBraking (5), | |
| **eventLowBattery (6),** | |
| eventEmergencyCall (7), | |
| } (SIZE (7, ...)) | |

According to the existing method excerpted in Tables 1 and 2, if an event occurs where the battery charge is below the predetermined value (e.g., 25%), the device transmits a PSM immediately without waiting for an interval configured for PSM transmission. After transmitting the PSM based on the corresponding event, PSM transmission is performed according to the existing message transmission interval (unless the battery is recharged). As described above, since the PSM is transmitted without adjusting the message transmission interval even after the battery charge falls below the predetermined value, the battery of the device is continuously consumed without considering the low battery status.

To address the above issue, according to an embodiment of the present disclosure, if the battery charge is below the predetermined value (for example, 25%), the message transmission interval may be adjusted/changed to reduce battery consumption. In addition, the communication function may be turned off for a specific period of time to further reduce the battery consumption of the VRU device (depending on the user's choice). Hereinafter, embodiments for more efficient power management in consideration of the low battery status will be described.

### (a) PSM configuration

The above-described PSM merely indicates that the battery status is low. However, a PSM configuration is proposed to provide more specific battery information. Table 3 is an excerpt of the proposed PSM configuration.

**[Table 3]**

| |
|---|
| PersonalSafetyMessage ::= SEQUENCE { |
| ... |
| events EventFlags OPTIONAL, |
| ... |
| batteryStatus BatteryStatus OPTIONAL, |
| batterySavingNoti BatterySavingNoti OPTIONAL, |
| regional SEQUENCE (SIZE(1..4)) OF |
| RegionalExtension {{REGION.Reg-PersonalSafetyMessage}} OPTIONAL, |
| ... |
| } |

Referring to Table 3, the PSM includes additional elements: batteryStatus DE and batterySavingNoti DE.

For example, the batteryStatus DE may be defined as shown in Table 4.

**[Table 4]**

| |
|---|
| Use: The battery status data element conveys the sender's state with regard to the battery status. For each field, the sender has the option to set to one if the stated criteria are met, but it is not required to do so. |
| The set of battery status and their respective minimum criteria are listed below. These definitions and criteria are normative. The Battery Status data element should not be included in a message unless at least one battery status is set to one. When any criteria associated with each field is no longer satisfied, the sender shall set the field to zero. The presence of the battery status element in a message indicates that unexpected situation has occurred for example, the battery of sender device is charged less than the minimum charge amount (e.g., 25%) and whether the battery is charging or not. A vehicle or VRU receiving such a message might decide to process it differently than a message that does not include the battery status element. When a given field of the battery status element is set to one, the message might include related optional data as well. Further details of these operational concepts can be found in the relevant standards. If no further normative requirements are provided, the below flags shall be used as given below. |

Referring to Table 4, the batteryStatus DE may include a plurality of fields corresponding to a plurality of items to indicate the battery status (e.g., below the minimum charge amount, charging, etc.). The VRU configures a value of 1 only for items corresponding to the battery status in each field. However, if 1 is not configured for all the fields, the batteryStatus DE can be omitted from the PSM. The VRU may also provide additional DE/information related to fields where 1 is configured.

In addition, the BatteryStatus DE may indicate whether the device is currently in use by indicating that the battery is charged above a specific minimum value but the device is set to the battery saving mode.

This field may ensure that a device set to the battery saving mode is not selected as a cluster leader during a process of clustering VRU safety protection messages.

Instead of including a plurality of fields in the batteryStatus DE, a bit value corresponding to the current status of the VRU may be selectively configured as shown in Table 5.

**[Table 5]**

| |
|---|
| ASN.1 Representation: |
| BatteryStatus ::= BIT STRING { |
| lowBattery (0), |
| isCharging (1), |
| underSavingMode (2), |
| } (SIZE (3, ...)) |

The BatterySavingNoti DE added to the PSM may be defined as follows.

**[Table 6]**

| |
|---|
| BatterySavingNoti ::= SEQUENCE { |
| disconnectedInSeconds BOOLEAN, |
| extendedTxInterval ExtendedTxInterval OPTIONAL, |
| expectedTxResumeTime ExpectedTxResumeTime OPTIONAL, |
| ... |
| } |
| ExtendedTxInterval ::= INTEGER (0..120) -- units of 10sec |
| ExpectedTxResumeTime ::= INTEGER (0..32000) -- units of minutes |

Referring to Table 6, the BatterySavingNoti DE may be used to minimize the battery consumption of the device by adjusting the V2X communication connection status or the message transmission interval when the battery of the PSM transmitting device falls below the minimum charge amount (e.g., 25%).

The BatterySavingNoti DE may signal that the V2X communication connection of the corresponding device will be disconnected within a few seconds through a disconnectedInSeconds field. When the corresponding field is set to TRUE and transmitted in a V2X message, devices receiving the V2X message may know that V2X messages transmitted from the device will be stopped for a few seconds.

When the device is charging the battery, if the battery charge amount is below the minimum charge amount, either a method of continuously transmitting V2X messages without immediately disconnecting V2X communication or a method of disconnecting V2X communication may be selected by the user to ensure the safety of the vehicle or VRU device. Then, the operation of the device may change depending on the selection.

When the battery charge amount of the device falls below the minimum charge amount even though the battery is charging, if the device is in a relatively safe area, the device may disconnect the V2X communication. Alternatively, the device may manually disconnect the V2X connection for faster charging. When disconnecting the V2X communication, the device may provide information regarding when the battery will be charged enough to transmit V2X messages, through the PSM.

If the battery change amount is below the minimum charge amount and the user selects to disconnect the V2X communication, the disconnectedInSeconds field of the BatterySavingNoti DE may be set to 'TRUE', and the estimated time required to charge the battery to a level capable of supporting the V2X communication may be calculated. Alternatively, if automatic calculation is not allowed, the user may directly determine the corresponding value. The corresponding value may be provided through an expectedTxResumeTime field.

On the other hand, instead of completely turning off the V2X communication function, the user may choose not to disable the communication function for the safety thereof but to increase the interval at which the device transmits messages to reduce the usage of the battery. In this case, the disconnectedInSeconds field is set to 'FALSE', and an extendedTxInterval field may be used to set/input a new message transmission interval that the device will use. Upon receiving the field, other devices may know that the interval of messages from the device will increase. Thus, when the transmission interval increases, it may resolve an issue where the receiving device misconceives that the transmitting device is malfunctioning.

### (b) Adjustment of message transmission interval in consideration of low battery

The following method is proposed to reduce battery consumption: when the battery of a VRU device is charged below a predetermined threshold, the VRU device may informs nearby devices of the battery status using an event flag of a PSM and adjust/increase a message transmission interval. A LowBatteryInterval value, which indicates the changed message transmission interval due to the low battery status may also be transmitted. A maximum interval value configured for PSM transmission, known as vruPSMMaxWait, may be configured for the VRU device. The device may be configured to transmit at least one PSM in every vruPSMMaxWait interval. The changed message transmission interval due to the low battery status may be set to vruPSMMaxWait.

Table 7 shows an example of the proposed LowBatteryInterval DE.

**[Table 7]**

| | |
|---|---|
| | Data Element: DE_LowBatteryInterval |
| Use: The DE_LowBatteryInterval data element represents the time interval between two consecutive PSM2 message transmissions when the VRU device's battery is charged lower than the threshold and the bit 'eventLowBattery' in the vruEventFlags data element is set to 'TRUE'. This value shall be set to n (n > 0 and n < 10001) to indicate a time value equal to or less than n x 0.001 s, and greater than (n-1) x 0.001 s. | |
| | ASN.1 Representation: |
| | DE_LowBatteryInterval ::= INTEGER (1100..10000) |
| Used By: This entry is used directly by one other data structure in this standard, a MSG called MSG_PersonalSafetyMessage2 (PSM2). In addition, this item may be used by data structures in other ITS standards. | |

Referring to Table 7, the LowBatteryInterval DE represents the time interval (period) between two consecutive PSM2 transmissions, which may be provided when the battery of the VRU device is below a threshold and an eventLowBattery bit field of a vruEventFlags DE is set to TRUE. For example, the value n set in the LowBatteryInterval DE is a natural number less than 10001. In this case, the indicated time interval (period) may be set to greater than (n-1) x 0.001 seconds and less than or equal to n x 0.001 seconds. More specifically, the value of n may be an integer selected from the range of 1100 to 10000 (i.e., 1100 to 10000 ms).

### (c) Determination of VRU cluster leader/member in consideration of low battery

A plurality of VRUs located within a specific radius may form a cluster. Table 8 is an excerpt from the SAE standard regarding VRU clustering.

**[Table 8]**

| |
|---|
| 6.3.5.21 DE_NumberOfParticipantsInCluster |
| When there are multiple VRUs in close vicinity, a VRU can be selected to transmit PSM for all the VRUs in this cluster based on the DE_PersonalClusterRadius value. The selection can be based on DE_TempID value and the VRU device in the cluster with the lowest DE_TempID value will be designated to transmit PSMs for the cluster. |
| This precise rules for the use of the element is planned to be defined in subsequent releases. |
| 6.3.5.22 DE_PersonalClusterRadius |
| The VRU will set this data element to the appropriate value with the default value of vruPersonalClusterRadiusDef. |

Referring to Table 8, a leader VRU, which will transmit a PSM on behalf of a VRU cluster, may be selected within the VRU cluster. Specifically, the VRU with the lowest TempID value may be v as the leader VRU to transmit the PSM. Since the leader VRU transmits the PSM, other VRU cluster members may omit PSM transmission, which may be advantageous in reducing battery consumption. For example, the leader VRU may transmit a PSM including the number of VRUs in the cluster and the radius value. Upon receiving the PSM, neighboring VRUs may determine that the neighboring VRUs are within the radius and then stop transmitting the PSM. It should be understood that the selection of the leader VRU based on the lowest ID described in Table 8 is merely an example, and the embodiments described later are not limited thereto.

Considering the roles of the leader and member in the VRU cluster, a method of selecting the leader/member of the VRU cluster based on the battery status may be required.

Table 9 shows the details of newly proposed VRU clustering.

**[Table 9]**

| |
|---|
| 6.3.5.21 DE_NumberOfParticipantsInCluster |
| When there are multiple VRUs in close vicinity, a cluster of VRUs can be defined. This can easily done by an external observer (like an intelligent infrastructure or a server) which is then sending out a surrogate PSM2 on behalf of the whole cluster, including the cluster radius DE_PersonalClusterRadius and the number of participants DE_NumberOfParticipantsInCluster. [6.3.5-VRU-PSMTX-DATAACC-022] |
| As a second option, a VRU should be selected to transmit a PSM2 on behalf of the whole group, but the mechanisms to negotiate the cluster leader, joining and leaving a cluster, when to build new clusters etc are complex and to be defined in subsequent releases of this document if considered meaningful. |
| It is considerable that any VRU device with lower battery than the threshold (e.g. 25%) or any VRU device in the power saving mode (manually set by user or automatically controlled by setting configuration) should not be the cluster leader because the cluster leader's device should keep transmitting a PSM2 on behalf of the whole group. Any VRU device with low battery can join a cluster as a member and can reduce the battery consumption by pausing the message transmission. |

Referring to Table 9, when the VRU cluster is formed, a VRU device with a low battery status may be prevented from being selected/operating as the cluster leader. In addition, a VRU device in the power saving mode may also be prevented from being selected/operating as the cluster leader even if the VRU device does not have a low battery status.

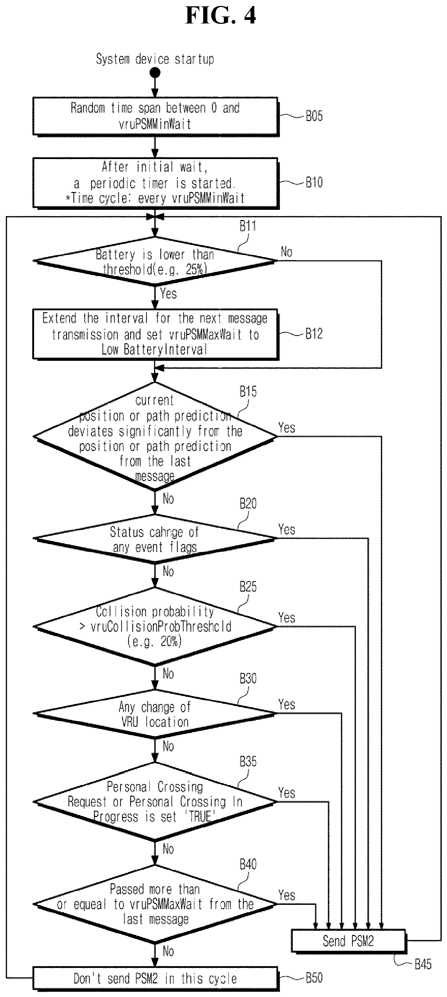

FIG. 4 illustrates an example of PSM2 transmission of a VRU device according to an embodiment.

A PSM2 is for broadcasting safety data on the movement/dynamic state of a VRU. To prevent unnecessary PSM2 transmission, trigger conditions for PSM2 transmission may be defined. If the VRU is operating/moving as indicated in the last PSM2 transmission (with no flag change), the VRU does not need to transmit a new PSM2 until the configured maximum interval is reached.

Referring to FIG. 4, the VRU device randomly selects a random timespan within the range of 0 to vruPSMMinWait to delay initially scheduled PSM2 transmission (B05). Herein, vruPSMMinWait may represent the minimum time the VRU needs to wait to transmit a message.

After the random timespan, a periodic timer with an interval of vruPSMMinWait starts (B10).

At each point triggered by the periodic timer, the VRU checks whether the trigger conditions for PSM2 transmission are satisfied (B11 to B40). If any one of the trigger conditions is satisfied, the VRU transmits the PSM2 (B45). If none of the trigger conditions are satisfied, the PSM2 may not be transmitted during the cycle of the periodic timer (B50).

Table 10 shows an exemplary PSM2 configuration.

**[Table 10]**

| |
|---|
| Use: The Personal Safety Message2 (PSM2) is used to broadcast safety data regarding the kinematic state of various types of Vulnerable Road Users (VRU), such as pedestrians, cyclists or road workers. Data items which are optional are included in a PSM2 as needed according to policies that are beyond the scope of this standard. |
| This message is under development, and is included in this standard to support field trials. Changes in the specification of the message and/or its constituent elements may occur in the future. |
| ASN.1 Representation: |
| PersonalSafetyMessage2 ::= SEQUENCE { |
| basicType PersonalDeviceUserType, |
| secMark DDateTime, |
| msgCnt MsgCount, |
| id TemporaryID, |
| position Position3D, -- Lat, Long, Elevation |
| accuracy PositionalAccuracy, |
| speed Velocity, |
| heading Heading, |
| accelSet AccelerationSet4Way OPTIONAL, |
| pathHistory PathHistory OPTIONAL, |
| pathPrediction PathPointPrediction OPTIONAL, |
| propulsion PsmPropelledInformation OPTIONAL, |
| sizeClass VruSizeClass OPTIONAL, |
| useState PersonalDeviceUsageState OPTIONAL, |
| crossRequest PersonalCrossingRequest OPTIONAL, |
| crossState PersonalCrossingInProgress OPTIONAL, |
| clusterSize NumberOfParticipantsInCluster OPTIONAL, |
| clusterRadius PersonalClusterRadius OPTIONAL, |
| eventResponderType PublicSafetyEventResponderWorkerType OPTIONAL, |
| activityType PublicSafetyAndRoadWorkerActivity OPTIONAL, |
| activitySubType PublicSafetyDirectingTrafficSubType OPTIONAL, |
| assistType PersonalAssistive OPTIONAL, |
| attachment Attachment OPTIONAL, |
| attachmentRadius AttachmentRadius OPTIONAL, |
| animalType AnimalType OPTIONAL, |
| events VruEventFlags OPTIONAL, |
| movementControl VruMovementControl OPTIONAL, |
| exteriorLights VruExteriorLights OPTIONAL, |
| vruExistingLocations VruExistingLocations OPTIONAL, |
| lowBatteryInterval LowBatteryInterval OPTIONAL, |
| ... |
| } |
| Used By: This entry is used directly by one other data structure in this standard, a MSG called MSG_MessageFrame (FRAME). In addition, this item may be used by data structures in other ITS standards. |
| Remarks: The optional PathPointPrediction field is only intended to be included when the PSM2 sender is traveling along a roadway, e.g. in a bicycle lane. |

For example, the trigger conditions checked in FIG. 4 may include at least one of the conditions listed in Table 11, but the present disclosure is not limited to these.

**[Table 11]**

| |
|---|
| The VRU device's current position or path prediction deviates significantly from the position or path prediction from the last message (details see below in the text) |
| Any change on the status of event flags[See DF_VruEventFlags] |
| The collision probability with any other object is above the vruCollisionProbThreshold. The vruCollisionProbThreshold is a threshold internally set by the sender of the message (PSM2), representing the collision probability at which the sender considers the situation to be potentially dangerous, justifying to stick to a high sending frequency. Collision probability is determined by a VRU based on OEM implementation using as input from the individual VRU sensors. Those sensors may comprise physical sensors (e.g., camera, radar, lidar, sonar, etc.) or may comprise virtual sensors such as over-the-air received PSM, PSM2, BSM or other application-layer messages. The collision probability threshold value should be optimized considering of the external environment. The dynamic motion properties (i.e. velocity, acceleration, heading, etc.) of VRUs or vehicles are influenced by external conditions such as weather, road conditions. For example, if it rains, the road might be more slippery and the vehicle's braking distance will increase. |
| Any change on the location of VRU existence [See DE_VruExistingLocations] |
| The time elapsed since the last PSM2 sending is more than or equal to vruPSMMaxWait |

The order of checking the trigger conditions shown in FIG. 4 is an example provided for the convenience of explanation, and thus, the order may be changed.

The VRU device checks whether the battery is below a threshold (B11), and if the battery is below the threshold, the VRU device may (re)set the maximum interval value for message transmission, vruPSMMaxWait, to the LowBatteryInterval value (e.g., Table 7) (B12).

If the current location or predicted path of the VRU device has significantly changed from the location or predicted path in the last PSM2 transmission, the VRU device may transmit the PSM2 to inform of the current location or predicted path (Yes in B15).

If there is a change in an event flag DE (VruEventFlags), the VRU device may transmit the PSM2 to notify the change (Yes in B20). Table 12 shows an example of the event flag DE included in the PSM2.

**[Table 12]**

| | |
|---|---|
| | Data Element: DE_VruEventFlags |
| Use: The event flags data element conveys the sender's state with regard to a set of events. For each event, the sender has the option to set the flag to one if the stated criteria are met, but it is not required to do so. The set of event flags and their respective minimum criteria are listed below. These definitions and criteria are normative. The Event Flag data element should not be included in a message unless at least one event flag is set to one. When one or more criteria associated with an event are no longer satisfied, the sender shall set the flag to zero in any event flag data element it sends. The presence of the event flag element in a message indicates that an unusual event has occurred. A vehicle or VRU receiving such a message might decide to process it differently than a message that does not include the event flag element. When a given event flag is set to one, the message might include related optional data as well. Further details of these operational concepts can be found in the relevant standards. | |
| | If no further normative requirements are provided, the below flags shall be used as given below. |
| | • Hazard Lights: The hazard lights are active. |
| | • ABS: ABS system is activated and active. |
| | • Traction Control: System activated and active. |
| | • Stability Control: System activated and active. |
| | • Hard Braking: The VRU device is decelerating at a level of greater than vruHardBrakeDecel. |
| | • Emergency call: an emergency call has been triggered in the last vruEmerCall. |
| | • eventStabilityLoss : Indicating that the VRU has lost stability (examples being in the process of falling down or erratic movement) (e.g. based on internal sensors) |
| | • Low Battery: Battery charge in VRU device is less than vruMinBattCharge, additional information can be provided in DE_LowBatteryInterval to make message transmission interval longer and to reduce the battery consumption. |
| ASN.1 Representation: | |
| VruEventFlags ::= BIT STRING { | |
| eventHazardLights (0), | |
| eventABSactivated (1), | |
| eventTractionControlLoss (2), | |
| eventStabilityControlactivated (3), | |
| eventStabilityLoss (4), | |
| eventHardBraking (5), | |
| eventLowBattery (6), | |
| eventEmergencyCall (7) | |
| } (SIZE (8, ...)) | |
| Used By: This entry is directly used by the following two other data structures in this standard: | |
| DF DF_VehiclesafetyExtensions , and | |
| MSG MSG_IntersectionCollisionAvoidance (ICA). | |
| In addition, this item may be used by data structures in other ITS standards. | |
| Remarks: This data element is expected to be present when various potentially dangerous events (such as hard braking) have been declared by the sender. Additional data elements in the message may provide more details on the cause of this event. | |

Referring to Table 12, the fields of the event flag DE may be configured in various ways. If none of these fields are satisfied, the event flag DE may be omitted. For example, the fields of the event flag DE may include at least one of the following: i) Hazard Lights On, ii) ABS System Activated, iii) Traction Control Function Activated, iv) Stability Control Function Activated, v) Hard Braking, vi) Emergency Call, vii) Stability Loss, viii) Low Battery. However, the present disclosure is not limited thereto.

The VRU device may transmit a PSM2 if the collision probability exceeds a collision threshold (vruCollisionProbThreshold) (Yes in B25). For instance, as described in Table 11, CollisionProbThreshold for PSM2 transmission may be configured, and the VRU device may calculate the collision probability based on sensors (e.g., cameras, radar, lidar, sonar, or virtual sensors). The configuration of CollisionProbThreshold needs to consider external environments because dynamic movement characteristics such as speed, acceleration, and direction are affected by weather and road conditions.

The VRU device may transmit the PSM2 if there is a change in a VRUExistingLocations DE, which indicates the attributes of the place where the VRU device is located (Yes in B30). Table 13 shows an example of the VRUExistingLocations DE included in the PSM2.

**[Table 13]**

| Data Element: DE_VruExistingLocations |
|---|
| Use: The DE_VruExistingLocations data element is used to describe the location of pedestrian or non-vehicular road user's existence. |
| ASN.1 Representation: |
| VruExistingLocations ::= ENUMERATED { |
| unavailable (0), |
| intersectionCrossing (1), |
| zebraCrossing (2), |
| sidewalk (3), |
| onVehicleRoad (4), |
| protectedGeographicArea (5), |
| max (255) |
| } |
| Used By: This entry is used directly by one other data structure in this standard, a MSG called |
| MSG_PersonalSafetyMessage2 (PSM2). In addition, this item may be used by data structures in other ITS standards. |

Referring to Table 13, the VRUExistingLocations DE may indicate VRU location attributes such as an intersection, crosswalk, sidewalk, roadway, and safety zone.

Referring back to FIG. 4, the VRU device may transmit the PSM2 if personal crossing is requested or in progress (Yes in B35).

In addition, the VRU device also transmits the PSM2 if vruPSMMaxWait has elapsed from the last PSM2 transmission (Yes in B40).

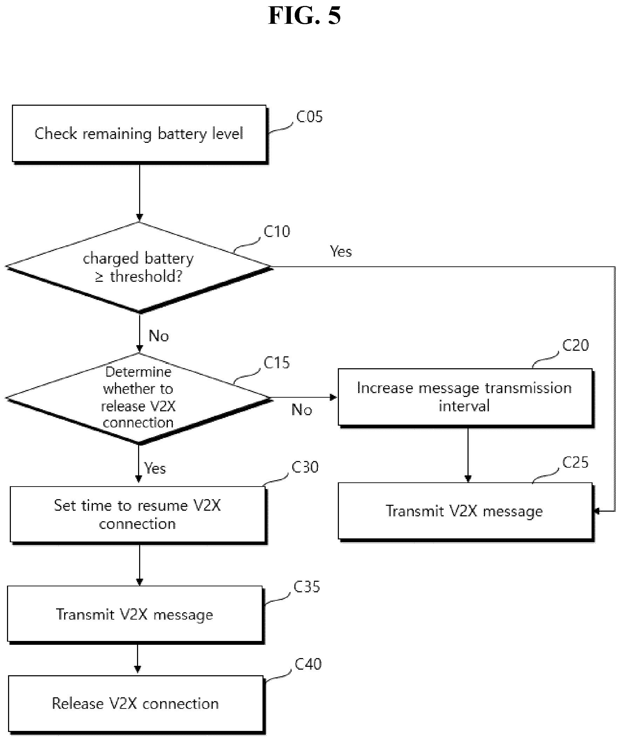

The VRU may disconnect a V2X connection considering a low battery status. FIG. 5 illustrates an example of a V2X connection management method in consideration of a battery state.

Referring to FIG. 5, the VRU device checks the remaining battery level (C05). If the battery is charged above a threshold (Yes in C10), the VRU device maintains a V2X connection and transmits a V2X message (C25).

If the battery is charged below the threshold (No in C10), the VRU device determines whether to maintain or disconnect the V2X connection (C15).

If the VRU devices determines to maintain the V2X connection, the VRU device may increase a message transmission interval (C20) and then transmit the V2X messages based thereon (C25).

If the VRU devices determines to disconnect the V2X connection, the VRU device may determine a time to resume the V2X connection (C30). The time to resume the V2X connection may be input by the user or calculated by the VRU, considering factors such as whether the battery is charging and the charging speed.

The VRU device may transmit the V2X message before disconnecting the V2X connection (C35).Then, the VRU device may disconnect the V2X connection (C40). The transmission of the V2X message may be to notify that the V2X connection will be disconnected.

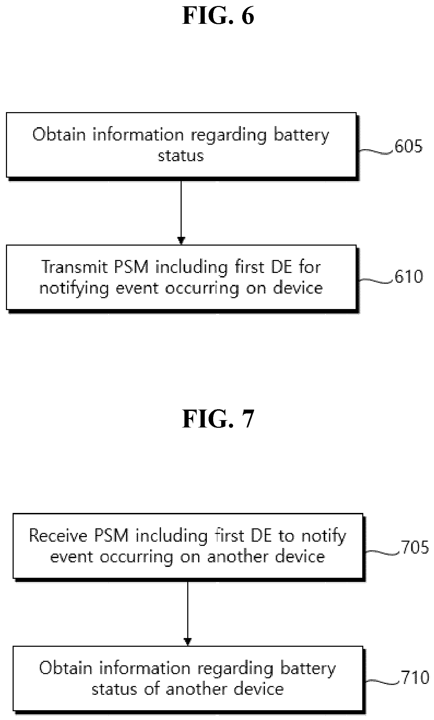

FIG. 6 illustrates a flow of a method by which a device transmits a message according to an embodiment.

Referring to FIG. 6, the device may obtain information regarding a status of a battery of the device (605).

The device may transmit a PSM including a first DE for notifying an event occurring on the device, based on the information regarding the battery status of the device and a battery charging threshold (610).

Based on that a field for notifying a low battery status in the first DE is set to a TRUE value, the PSM may be configured to further include a second DE for providing information regarding a PSM transmission interval of the device in the low battery status.

The PSM transmission interval of the device in the low battery status may be set to be higher than or equal to a first value.

The first value may be related to a PSM transmission interval when the battery status of the device is higher than or equal to the battery charging threshold.

The first value may be 1100 ms.

The device may form a VRU cluster with at least one other device. The device may determine, based on the battery status of the device, whether to be a leader which performs PSM transmission on behalf of the VRU cluster.

Based on that the battery status of the device is lower than the battery charging threshold, the device may operate as a member other than the leader of the VRU cluster.

Based on that the device operates in a battery saving mode, the device may operate as a member other than a leader of a VRU cluster.

The PSM may include information for notifying that the device is charging the battery or operating in a battery saving mode.

The device may be a VRU UE.

FIG. 7 illustrates a flow of a method by which a device receives a message according to an embodiment.

Referring to FIG. 7, the device may receive a PSM including a first DE for notifying an event occurring on another device (705).

The device may obtain information regarding a status of a battery of the other device based on the first DE (710). Based on that a field for notifying a low battery status in the first DE is set to a TRUE value, the device may be configured to: determine that the battery status of the other device is lower than a battery charging threshold; and obtain a second DE providing information regarding a PSM transmission interval of the other device in the low battery status from the PSM.

The PSM transmission interval of the other device in the low battery status may be set to be higher than or equal to a first value.

The first value may be related to a PSM transmission interval when the battery status of the other device is higher than or equal to the battery charging threshold.

The first value may be 1100 ms.

The PSM may include information for notifying that the other device is charging the battery or operating in a battery saving mode.

The device may be a VRU UE.

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

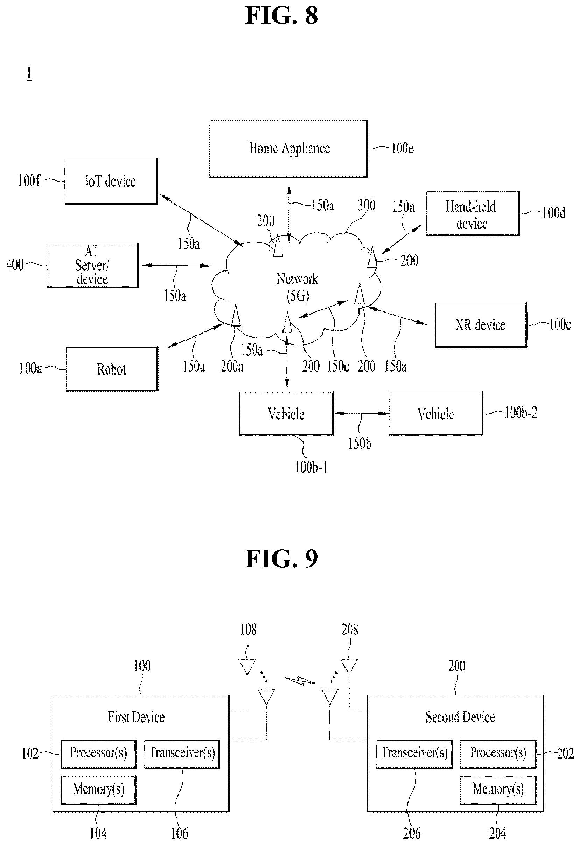

FIG. 8 illustrates a communication system 1 applied to the present disclosure.

Referring to FIG. 8, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 9 illustrates wireless devices applicable to the present disclosure.

Referring to FIG. 9, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. Receivers included in the transceiver 206 may include a first receiver (MR) supporting a first type of waveform (e.g., OFDM) and a second receiver (LR) supporting a second type of waveform (e.g., OOK). The second receiver may consume less power than the first receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

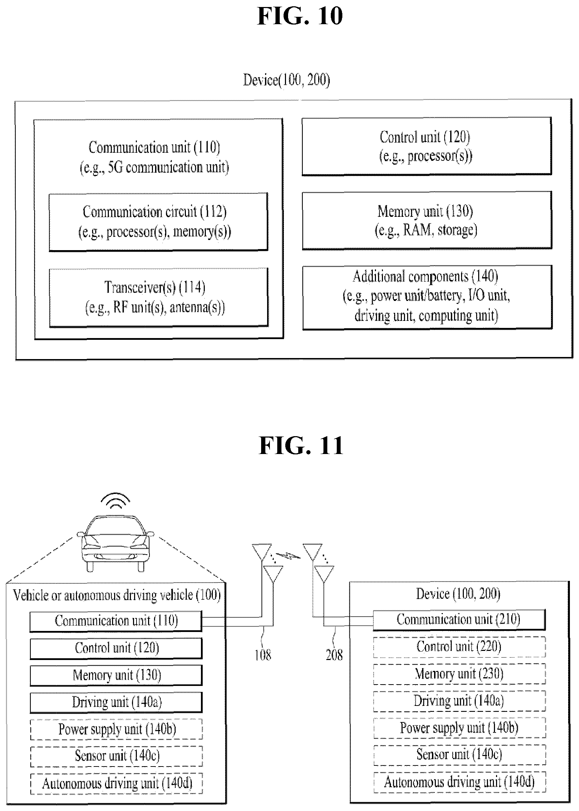

FIG. 10 illustrates another example of a wireless device applied to the present disclosure. The wireless device may be implemented in various forms according to a use-case/service (refer to FIG. 8).

Referring to FIG. 10, wireless devices 100 and 200 may correspond to the wireless devices 100 and 200 of FIG. 9 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcast terminal, a hologram device, a public safety device, an MTC device, a medicine device, a financial technology (fintech) device (or a finance device), a security device, a climate/environment device, the AI server/device (400 of FIG. 8), the BSs (200 of FIG. 8), a network node, etc. The wireless device may be used in a mobile or fixed place according to a use-example/service.

In FIG. 10, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 11 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims not by the above description, and all changes coming within the meaning and equivalency range of the appended claims are intended to be embraced therein.

### INDUSTRIAL APPLICABILITY

Embodiments of the present disclosure as described above can be applied to various devices of an intelligent transportation system.

## Claims

1. A method of transmitting a message by a device in a wireless communication system, the method comprising:
obtaining (605) information regarding a status of a battery of the device; and
transmitting (610) a personal safety message, PSM, including a first data element, DE, for notifying an event occurring on the device, based on the information regarding the battery status of the device and a battery charging threshold,
wherein based on that a field for notifying a low battery status in the first DE is set to a TRUE value, the PSM is configured to further include a second DE for providing information regarding a PSM transmission interval of the device in the low battery status.

2. The method according to claim 1, wherein the PSM transmission interval of the device in the low battery status is set to be higher than or equal to a first value.

3. The method according to claim 2, wherein the first value is related to a PSM transmission interval when the battery status of the device is higher than or equal to the battery charging threshold.

4. The method according to claim 2 or 3, wherein the first value is 1100 milliseconds.

5. The method according to any one of claims 1 to 4, wherein the device forms a vulnerable road user, VRU, cluster with at least one other device, and
wherein the device determines, based on the battery status of the device, whether to be a leader which performs PSM transmission on behalf of the VRU cluster.

6. The method according to claim 5, wherein based on that the battery status of the device is lower than the battery charging threshold, the device operates as a member other than the leader of the VRU cluster.

7. The method according to claim 5 or 6, wherein based on that the device operates in a battery saving mode, the device operates as a member other than a leader of a vulnerable road user, VRU, cluster.

8. The method according to any one of claims 1 to 7, wherein the PSM includes information for notifying that the device is charging the battery or operating in a battery saving mode.

9. The method according to any one of claims 1 to 8, wherein the device is a user equipment, UE, for a vulnerable road user, VRU.

10. A non-transitory computer-readable medium having recorded thereon a program for performing the method according to any one of claims 1 to 9.

11. A device configured to transmit a message in a wireless communication system, the device comprising:
a memory configured to store instructions; and
a processor configured to perform operations by executing the instructions,
wherein the operations performed by the processor comprise:
obtaining (605) information regarding a status of a battery of the device; and
transmitting (610) a personal safety message, PSM, including a first data element, DE, for notifying an event occurring on the device, based on the information regarding the battery status of the device and a battery charging threshold, and
wherein based on that a field for notifying a low battery status in the first DE is set to a TRUE value, the PSM is configured to further include a second DE for providing information regarding a PSM transmission interval of the device in the low battery status.

12. The device according to claim 11, further comprising a transceiver,
wherein the device is a user equipment, UE, for a vulnerable road user, VRU.

13. The device according to claim 11 or 12, wherein the device is a processing device configured to control a user equipment, UE, for a vulnerable road user, VRU.

14. A method of receiving a message by a device in a wireless communication system, the method comprising:
receiving (705) a personal safety message, PSM, including a first data element, DE, for notifying an event occurring on another device; and
obtaining (710) information regarding a status of a battery of the other device based on the first DE,
wherein based on that a field for notifying a low battery status in the first DE is set to a TRUE value, the device is configured to:
determine that the battery status of the other device is lower than a battery charging threshold; and
obtain a second DE providing information regarding a PSM transmission interval of the other device in the low battery status from the PSM.

15. A device configured to receive a message in a wireless communication system, the device comprising:
a memory configured to store instructions; and
a processor configured to perform operations by executing the instructions,
wherein the operations performed by the processor comprise:
receiving (705) a personal safety message, PSM, including a first data element, DE, for notifying an event occurring on another device; and
obtaining (710) information regarding a status of a battery of the other device based on the first DE,
wherein based on that a field for notifying a low battery status in the first DE is set to a TRUE value, the device is configured to:
determine that the battery status of the other device is lower than a battery charging threshold; and
obtain a second DE providing information regarding a PSM transmission interval of the other device in the low battery status from the PSM.

## Patentansprüche

1. Verfahren zum Übertragen einer Nachricht durch eine Vorrichtung in einem drahtlosen Kommunikationssystem, wobei das Verfahren umfasst:
Erfassen (605) von Informationen über den Status einer Batterie des Geräts; und
Senden (610) einer persönlichen Sicherheitsnachricht, PSM, die ein erstes Datenelement, DE, enthält, um ein Ereignis zu melden, das auf dem Gerät auftritt, basierend auf den Informationen über den Batteriestatus des Geräts und einem Batterieladeschwellenwert,
wobei auf der Grundlage dessen, dass ein Feld zum Benachrichtigen eines niedrigen Batteriestatus in dem ersten DE auf einen TRUE-Wert gesetzt ist, die PSM so konfiguriert ist, dass sie ferner ein zweites DE zum Bereitstellen von Informationen bezüglich eines PSM-Übertragungsintervalls des Geräts in dem niedrigen Batteriestatus umfasst.

2. Verfahren nach Anspruch 1, wobei das PSM-Übertragungsintervall des Geräts in dem niedrigen Batteriestatus so eingestellt ist, dass es größer oder gleich einem ersten Wert ist.

3. Verfahren nach Anspruch 2, wobei der erste Wert sich auf ein PSM-Übertragungsintervall bezieht, wenn der Batteriestatus des Geräts größer oder gleich dem Batterieladeschwellenwert ist.

4. Verfahren nach Anspruch 2 oder 3, wobei der erste Wert 1100 Millisekunden beträgt.

5. Verfahren nach einem der Ansprüche 1 bis 4, wobei das Gerät mit mindestens einem anderen Gerät einen Cluster gefährdeter Verkehrsteilnehmer, VRU, bildet und
wobei das Gerät auf der Grundlage des Batteriestatus des Geräts bestimmt, ob es als Anführer fungiert, der die PSM-Übertragung im Namen des VRU-Clusters durchführt.

6. Verfahren nach Anspruch 5, wobei das Gerät auf der Grundlage, dass der Batteriestatus des Geräts unter dem Batterieladeschwellenwert liegt, als ein anderes Mitglied als der Anführer des VRU-Clusters fungiert.

7. Verfahren nach Anspruch 5 oder 6, wobei das Gerät auf der Grundlage, dass es in einem Batteriesparmodus arbeitet, als ein anderes Mitglied als der Anführer eines Clusters gefährdeter Verkehrsteilnehmer, VRU, fungiert.

8. Verfahren nach einem der Ansprüche 1 bis 7, wobei das PSM Informationen enthält, um mitzuteilen, dass das Gerät die Batterie lädt oder in einem Batteriesparmodus arbeitet.

9. Verfahren nach einem der Ansprüche 1 bis 8, wobei das Gerät ein Benutzergerät, UE, für einen gefährdeten Verkehrsteilnehmer, VRU, ist.

10. Nichtflüchtiges, computerlesbares Medium, auf dem ein Programm zur Durchführung des Verfahrens gemäß einem der Ansprüche 1 bis 9 aufgezeichnet ist.

11. Gerät, das zum Senden einer Nachricht in einem drahtlosen Kommunikationssystem konfiguriert ist, wobei das Gerät umfasst:
einen Speicher, der zum Speichern von Befehlen konfiguriert ist; und
einen Prozessor, der zum Ausführen von Operationen durch Ausführen der Befehle konfiguriert ist,
wobei die vom Prozessor ausgeführten Operationen umfassen:
Erhalten (605) von Informationen bezüglich eines Zustands einer Batterie des Geräts; und
Senden (610) einer persönlichen Sicherheitsnachricht, PSM, die ein erstes Datenelement, DE, enthält, um ein auf dem Gerät auftretendes Ereignis basierend auf den Informationen über den Batteriestatus des Geräts und einen Batterieladeschwellenwert zu melden, und
wobei auf der Grundlage dessen, dass ein Feld zum Benachrichtigen über einen niedrigen Batteriestatus in dem ersten DE auf einen TRUE-Wert gesetzt ist, die PSM so konfiguriert ist, dass sie ferner ein zweites DE zum Bereitstellen von Informationen bezüglich eines PSM-Übertragungsintervalls des Geräts in dem niedrigen Batteriestatus umfasst.

12. Gerät gemäß Anspruch 11, das ferner einen Transceiver umfasst,
wobei das Gerät eine Benutzerausrüstung, UE, für einen gefährdeten Verkehrsteilnehmer, VRU, ist.

13. Gerät gemäß Anspruch 11 oder 12, wobei das Gerät ein Verarbeitungsgerät ist, das so konfiguriert ist, dass es ein Benutzergerät, UE, für einen gefährdeten Verkehrsteilnehmer, VRU, steuert.

14. Verfahren zum Empfangen einer Nachricht durch ein Gerät in einem drahtlosen Kommunikationssystem, wobei das Verfahren umfasst:
Empfangen (705) einer persönlichen Sicherheitsnachricht, PSM, die ein erstes Datenelement, DE, zum Benachrichtigen über ein Ereignis enthält, das auf einem anderen Gerät auftritt; und
Erhalten (710) von Informationen bezüglich eines Zustands einer Batterie des anderen Geräts auf der Grundlage des ersten DE,
wobei auf der Grundlage dessen ein Feld zum Benachrichtigen über einen niedrigen Batteriestatus in dem ersten DE auf einen TRUE-Wert gesetzt wird, wobei das Gerät konfiguriert ist, um:
festzustellen, dass der Batteriestatus des anderen Geräts unter einem Batterieladeschwellenwert liegt; und
ein zweites DE zu erhalten, das Informationen über ein PSM-Übertragungsintervall des anderen Geräts in dem niedrigen Batteriestatus aus dem PSM bereitstellt.

15. Gerät, das zum Empfangen einer Nachricht in einem drahtlosen Kommunikationssystem konfiguriert ist, wobei das Gerät umfasst:
einen Speicher, der zum Speichern von Befehlen konfiguriert ist; und
einen Prozessor, der zum Ausführen von Operationen durch Ausführen der Befehle konfiguriert ist,
wobei die vom Prozessor ausgeführten Operationen umfassen:
Empfangen (705) einer persönlichen Sicherheitsnachricht, PSM, die ein erstes Datenelement, DE, enthält, um ein Ereignis zu melden, das auf einem anderen Gerät auftritt; und
Erhalten (710) von Informationen bezüglich eines Zustands einer Batterie des anderen Geräts auf der Grundlage des ersten DE,
wobei auf der Grundlage dessen ein Feld zum Benachrichtigen über einen niedrigen Batteriestatus in dem ersten DE auf einen TRUE-Wert gesetzt wird, wobei das Gerät konfiguriert ist, um:
festzustellen, dass der Batteriestatus des anderen Geräts unter einem Batterieladeschwellenwert liegt; und
ein zweites DE zu erhalten, das Informationen über ein PSM-Übertragungsintervall des anderen Geräts im niedrigen Batteriestatus aus dem PSM bereitstellt.

## Revendications

1. Procédé de transmission d'un message par un dispositif dans un système de communication sans fil, le procédé comprenant:
l'obtention (605) d'informations concernant l'état d'une batterie du dispositif; et
la transmission (610) d'un message de sécurité personnelle, PSM, comprenant un premier élément de données, DE, pour signaler un événement se produisant sur le dispositif, sur la base des informations concernant l'état de la batterie du dispositif et un seuil de charge de la batterie,
dans lequel, étant donné qu'un champ destiné à signaler un état de batterie faible dans le premier DE est défini sur une valeur VRAI, le PSM est configuré pour inclure en outre un deuxième DE destiné à fournir des informations concernant un intervalle de transmission PSM du dispositif dans l'état de batterie faible.

2. Procédé selon la revendication 1, dans lequel l'intervalle de transmission PSM du dispositif dont l'état de la batterie est faible est réglé pour être supérieur ou égal à une première valeur.

3. Procédé selon la revendication 2, dans lequel la première valeur est liée à un intervalle de transmission PSM lorsque l'état de la batterie du dispositif est supérieur ou égal au seuil de charge de la batterie.

4. Procédé selon la revendication 2 ou 3, dans lequel la première valeur est 1100 millisecondes.

5. Procédé selon l'une quelconque des revendications 1 à 4, dans lequel le dispositif forme un groupe d'usagers vulnérables de la route, VRU, avec au moins un autre dispositif, et
dans lequel le dispositif détermine, en fonction de l'état de la batterie du dispositif, s'il doit être un chef qui effectue la transmission PSM au nom du groupe VRU.

6. Procédé selon la revendication 5, dans lequel si l'état de la batterie de l'appareil est inférieur au seuil de charge de la batterie, le dispositif fonctionne comme un membre autre que le chef du groupe VRU.

7. Procédé selon la revendication 5 ou 6, dans lequel étant donné que le dispositif fonctionne en mode économie d'énergie, le dispositif fonctionne en tant que membre autre que le chef d'un groupe d'usagers vulnérables de la route, VRU.

8. Procédé selon l'une quelconque des revendications 1 à 7, dans lequel le PSM comprend des informations indiquant que le dispositif est en train de charger la batterie ou fonctionne en mode économie d'énergie.

9. Procédé selon l'une quelconque des revendications 1 à 8, dans lequel le dispositif est un équipement utilisateur, UE, destiné à un usager vulnérable de la route, VRU.

10. Support non transitoire lisible par ordinateur sur lequel est enregistré un programme servant à exécuter le procédé selon l'une quelconque des revendications 1 à 9.

11. Dispositif configuré pour transmettre un message dans un système de communication sans fil, le dispositif comprenant:
une mémoire configurée pour stocker des instructions; et
un processeur configuré pour réaliser les opérations en exécutant les instructions,
dans lequel les opérations réalisées par le processeur consistent à:
l'obtention (605) d'informations concernant l'état d'une batterie du dispositif; et
la transmission (610) d'un message de sécurité personnelle, PSM, comprenant un premier élément de données, DE, pour signaler un événement se produisant sur le dispositif, sur la base des informations concernant l'état de la batterie du dispositif et un seuil de charge de la batterie, et
dans lequel, étant donné qu'un champ destiné à signaler un état de batterie faible dans le premier DE est défini sur une valeur VRAI, le PSM est configuré pour inclure en outre un deuxième DE destiné à fournir des informations concernant un intervalle de transmission PSM du dispositif dont l'état de batterie est faible.

12. Dispositif selon la revendication 11, comprenant en outre un émetteur récepteur,
le dispositif étant un équipement utilisateur, UE, pour un usager vulnérable de la route, VRU.

13. Dispositif (100) selon la revendication 11 ou 12, dans lequel le dispositif est un dispositif de traitement configuré pour commander un équipement utilisateur, UE, pour un usager vulnérable de la route, VRU.

14. Procédé de réception d'un message par un dispositif dans un système de communication sans fil, le procédé comprenant:
la réception (705) d'un message de sécurité personnelle, PSM, comprenant un premier élément de données, DE, pour notifier un événement se produisant sur un autre dispositif; et
l'obtention (710) d'informations concernant l'état d'une batterie de l'autre dispositif sur la base du premier DE,
dans lequel, étant donné qu'un champ destiné à signaler un état de batterie faible dans le premier DE est défini sur une valeur VRAI, le dispositif est configuré pour:
déterminer que l'état de la batterie de l'autre appareil est inférieur à un seuil de charge de batterie; et
obtenir un deuxième DE fournissant des informations concernant un intervalle de transmission PSM de l'autre dispositif dont l'état de batterie est faible, à partir du PSM.

15. Dispositif configuré pour recevoir un message dans un système de communication sans fil, le dispositif comprenant:
une mémoire configurée pour stocker des instructions; et
un processeur configuré pour réaliser les opérations en exécutant les instructions,
dans lequel les opérations réalisées par le processeur consistent à:
la réception (705) d'un message de sécurité personnelle, PSM, comprenant un premier élément de données, DE, pour notifier un événement se produisant sur un autre dispositif; et
l'obtention (710) d'informations concernant l'état d'une batterie de l'autre dispositif sur la base du premier DE,
dans lequel, étant donné qu'un champ destiné à signaler un état de batterie faible dans le premier DE est défini sur une valeur VRAI, le dispositif est configuré pour:
déterminer que l'état de la batterie de l'autre appareil est inférieur à un seuil de charge de batterie; et
obtenir un deuxième DE fournissant des informations concernant un intervalle de transmission PSM de l'autre dispositif dont l'état de batterie est faible à partir du PSM.
